# EUROPEAN PATENT SPECIFICATION

(11) **EP 0 782 958 B1**
(45) Date of publication and mention of the grant of the patent: **12.05.1999**
(21) Application number: 97103512.6
(22) Date of filing: 18.01.1994
(51) Int. Cl.: B65B 59/00

(54) **Adjustable flight bars for a packaging machine**
Einstellbarer Mitnehmer für eine Verpackungsmaschine
Raclette de transport ajustable pour machine d'emballage

(30) Priority: 19.01.1993 US 5349; 19.08.1993 US 108918
(43) Date of publication of application: 09.07.1997
(62) Divisional of application: 94300339.2
(73) Proprietor: THE MEAD CORPORATION, Dayton Ohio 45463 (US)
(72) Inventor: Calvert, Rodney K., Dunwoody, Georgia 30338 (US); Vanhorne, George R., Atlanta, Georgia (US); Fishback, Alton J., Austell, Georgia 30001 (US)
(74) Representative: Hepworth, John Malcolm

(56) References cited:
- EP-A- 0 485 762

## Description

This invention relates generally to the loading of articles such as cans or bottles into end-loading sleeve type cartons. More particularly, the invention is concerned with an arrangement for varying the distance of an adjacent pair of flight bars so as to render the system adjustable for use with packages of different depths as measured in the direction of movement of the packages.

U.S. patent 4,237,673 issued December 9, 1980 discloses an arrangement wherein open ended sleeve type cartons are moved along a predetermined path while containers to be loaded into the cartons are fed at an acute angle to the path of movement of the cartons by transverse flight bars which are provided with wedge shaped end portions to facilitate a container grouping function. The flight bars also act as efficient means for driving the incoming items inwardly toward the path of movement of the open ended cartons so as to load the articles into one or both ends of the carton.

U.S. patent 5, 176,612 issued January 5, 1993 discloses a machine for feeding open ended sleeve type cartons from a hopper and for manipulating such cartons into set up condition and thereafter for depositing the cartons onto conveyor means having transverse flight bars engageable with the leading and trailing parts of the set up cartons.

EPA 485 762 discloses a conveyor device in a packaging machine which has front and rear dogs mounted on endless parallel conveyor chains. The chains are adjusted manually to vary the distance between front and rear dogs and to increase the spacing between the rear dogs to enable cartons of different sizes to be conveyed.

In order to adapt presently known flight bar systems for use in conjunction with packages of different horizontal dimensions in the direction of package movement it has been necessary to remove existing flight bars from the machine to substitute such bars by other flight bars having different dimensions and tip angles than the original flight bars. Similarly it is known to adjust the spacing between adjacent flight bars by, for example, removing detachable strip portion of the flight bars which renders a packaging system useable with larger packages, such detachable strips being removed individually from all the flight bars. Alternatively, such strips may be added to the flight bars to decrease the spacing there between for use with smaller size packages.

Either of these known methods of adapting a machine for use for different size packages is very time consuming and expensive and requires the services of a knowledgeable operator or mechanic.

One aspect of the present invention provides a flight bar unit for a packaging machine which unit comprises a leading flight bar component and a trailing flight bar component which components are interrelated so that they can be shifted relative to one another characterised in that the interrelation comprises linkage means formed to provide and end face across the space between said flight bar components at each end of the unit when the components are spaced apart, said end face being angled to facilitate an article grouping function by engagement with rows of incoming articles to be loaded and which are moved at an acute angle into the path of movement of the flight bar unit.

According to an optional feature of this aspect of the present invention, the components are closed and the linkage means may be put into an inoperative position and wherein an angled end face of the leading flight bar component being angled to facilitate article grouping function by engagement with rows of incoming articles to be loaded which are moving at an acute angle into the path of movement of the flight bar unit.

According to another optional feature of this aspect of the invention, said linkage means may be provided for altering the angle of the ends and/or end faces of the ends of the unit when the leading and trailing components are shifted relative to one another.

According to yet another optional feature of this aspect of the invention, said linkage means may be pivoted at one of its ends to said leading flight bar component and includes slot adjacent other end in which a pin provided by the trailing flight bar components is slidably received to facilitate pivoting movement.

An embodiment of the invention will now be described, by way of example, with reference to the accompanying drawings, in which:-
FIG.1 is a perspective view of the infeed end of a packaging machine similar to that disclosed in the aforementioned U.S. patent 5, 176,612;
FIG.2 is a plan view of a pair of flight bar units of a series according to this invention in which leading and trailing components of each flight bar are hinged apart to decrease the spacing between the units;
FIG.3 is a view similar to FIG.2 but shows the leading and trailing components of the flight bars closed in face to face relationship with each other thereby to increase the spacing between the units;
FIG.4 is an enlarged view of the end portion of a leading and trailing component together with drive chains;
FIG.5 is a cross-sectional view taken along the line 5-5 as shown in FIG.4;
FIG.6 is a cross sectional view taken along the line 6-6 in FIG.4;
FIG.7 is a schematic representation of the system drive components, and;
FIG.8 is a schematic representation of a known form of speed reducer.

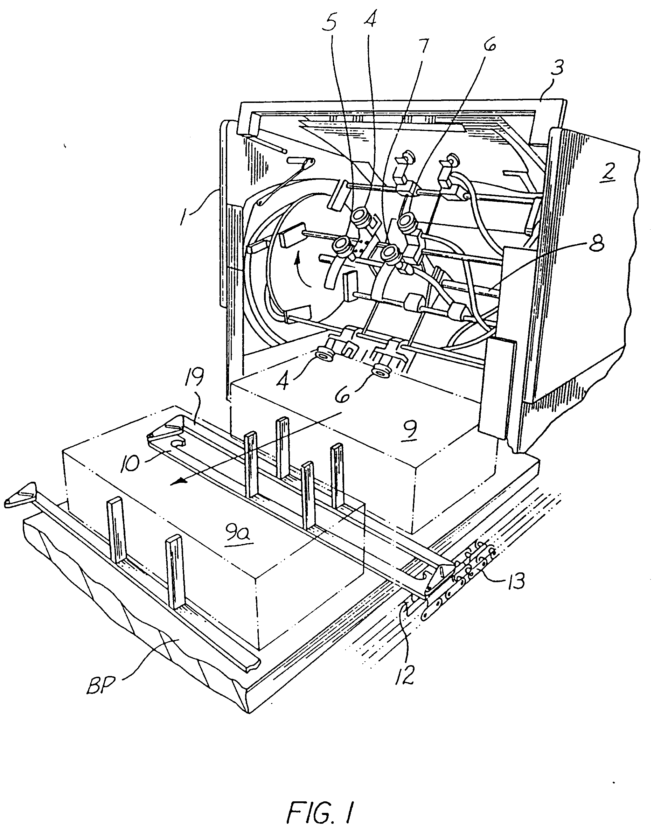

The structure shown in FIG.1 is similar in some respects to FIG.1 of the aforementioned U.S. patent 5,176,612. Hence, a pair of side frame support panels 1 and 2 are provided and the lower portion of a hopper is disposed atop a crossbar 3 shown in conjunction with a few collapsed cartons which are to be withdrawn from the hopper and set up into open ended condition by suction cups such as 4, 5, 6 and 7. The suction cup assembly is rotatable about main shaft 8 to engage and withdraw the lowermost carton from the hopper and to manipulate the carton panels into set up condition as best shown in the aforementioned U.S. patent 5,176,612 issued January 5, 1993. The cartons 9 and 9a are separated by a flight bar formed according to this invention and which includes a leading component 10 and a trailing component 19. The leading component is driven by a pair of endless driving elements such as a pair of chains one of which is designated by the numeral 13 and the other of which is not shown in FIG.1. Similarly, trailing component 19 is movable by virtue of its connection with endless chain 12 and by a similar chain not shown in FIG.1 but which cooperates with the opposite end of trailing component 19.

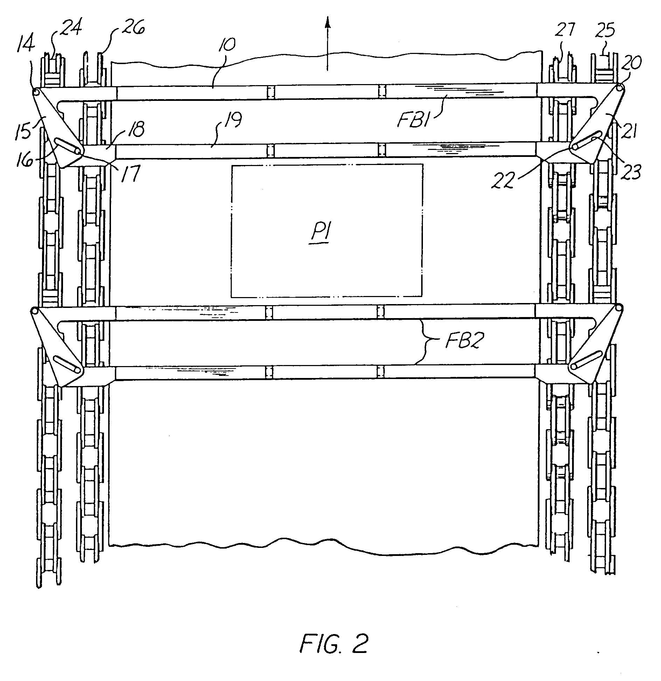

Means for interconnecting the leading and trailing components is provided so as to limit relative movement therebetween within a predetermined range. Thus, as best shown in FIG.2, leading component 10 is pivotally mounted at pivot 14 to end plate 15 having a slot 16 formed therein which receives a pin 17 secured to an end part 18 of the trailing component 19. The right hand end of leading component 10 of flight bar FB1 is similarly pivotally connected at pivot 20 to end plate 21. A pin 22 is mounted on the right hand end of trailing component 19 and rides in slot 23 formed in end plate 21. Leading component 10 of the leading flight bar unit FB1 of the pair illustrated is secured to endless drive chains 24 and 25, and trailing component 19 of flight bar unit FB1 is secured to endless chains 26 and 27.

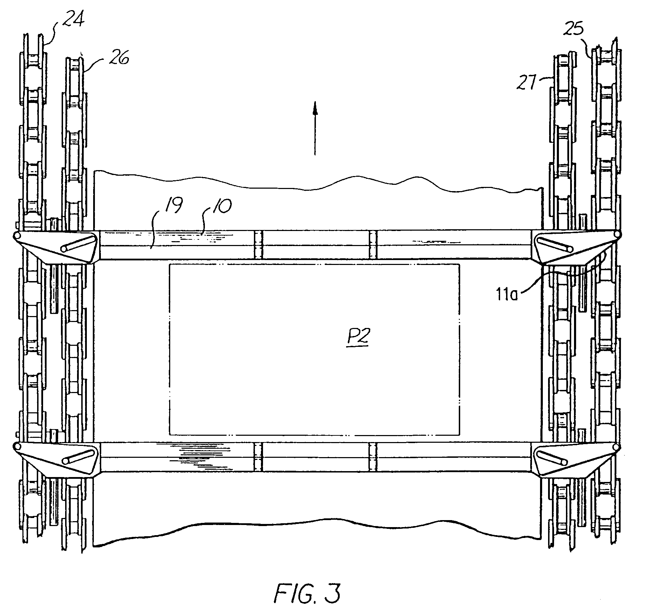

In order to adjust the assembly shown in FIG.2 conveying carton P1 for use in conjunction with the larger carton P2 as shown in FIG.3, the chains 24 and 25 are operated to move relative to the chains elements 26 and 27 while the machine is inoperative so as to increase the spacing between the flight bar units. In this embodiment, both the leading and trailing components 10 and 19 are shifted to become disposed adjacent to or in parallel contacting relation with each other, thereby to adapt the structure as shown in FIG.2 for use with a package P2 as shown in FIG.3. This adjustment of the machine can be effected in an efficient and rapid manner.

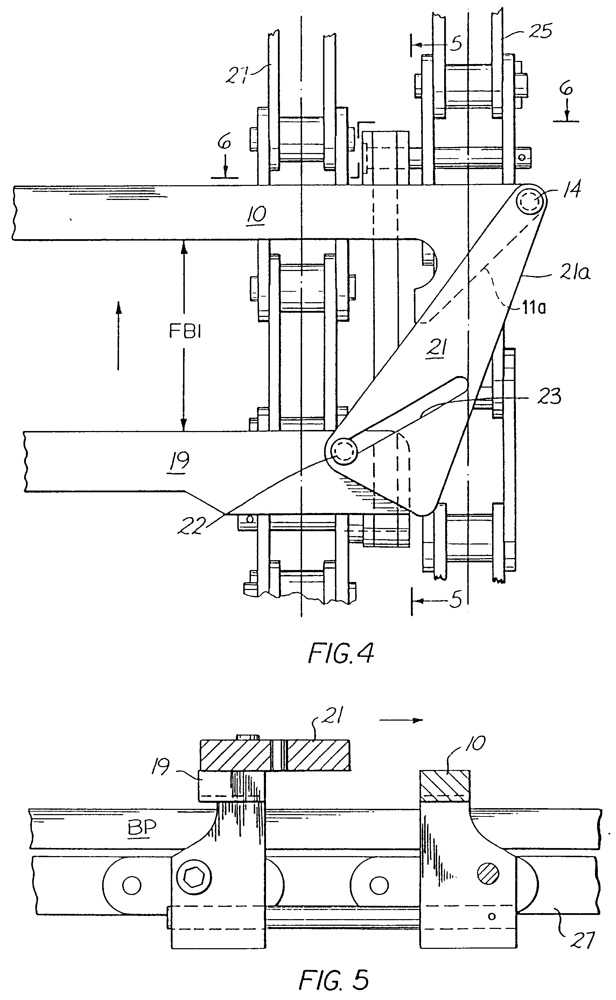

As shown in FIG.3, the edge 11a of the end part of leading component 10 at each of its ends is angled to facilitate an article grouping function by engagement with rows of incoming articles to be loaded and which are moving at an acute angle into the path of movement of the flight bars. This loading arrangement is shown and described in the U.S. patent 4,237,673. However, when the flight bar unit e.g. FB1 is adjusted so that the leading and trailing components 10, 19, respectively, are moved apart, the angled end part is provided by the end face 21a of plate 21 as shown in FIG.4. It will be appreciated that moving the leading and trailing components of the flight bar units apart decreases the spacing between adjacent units and thus adapts the conveying system for use with smaller sized cartons.

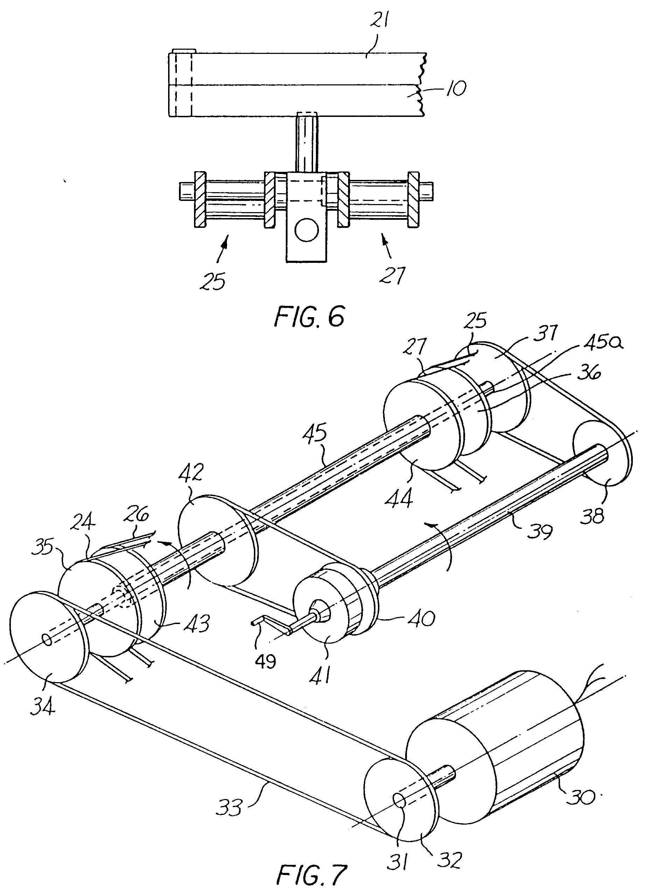

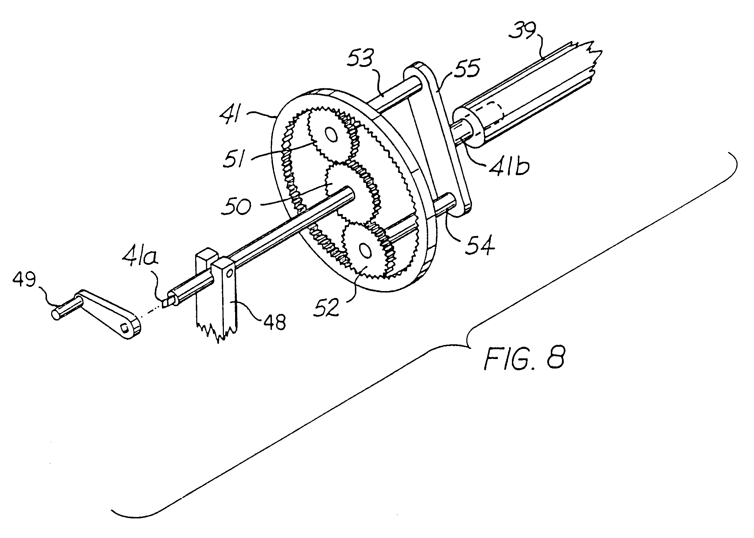

Normal drive and manipulation of the endless drive chains to effect adjustment is provided by the arrangement shown in FIGS. 7 and 8. A drive motor 30 is arranged through its shaft 31 and the sprocket 32 mounted on shaft 31 to drive the driving chain 33 so as to impart rotary motion to driving sprocket 34. The driving sprocket 34 drives sprockets 35, 36 and 37 and chains 24 and 25 through inner shaft 45a. Sprocket 37 drives sprocket 38, shaft 39 and output shaft 41b of gearbox 41.

If input shaft 41a to gearbox 41 is secured against rotation by a clamping bearing 48 then shafts 45 and 45a rotate together with no relative rotation therebetween. Of course, this establishes a static relationship so that chains 24 and 25 do not move relative to chains 26 and 27 and thus the trailing components of each flight bar are held in fixed relation relative to their associated leading components.

When it is desired to condition the system for use in conjunction with the structure shown in FIG.3 from that shown in FIG.2 and vice versa, the clamped condition of input shaft 41a is relieved by loosening clamping bearing 48 which clamps the input shaft 41a against rotation so as to permit rotation. The degree of rotation is effected by means of manually operable crank 49. Schematically represented FIG.8 constitutes a representation of the internal parts of gear box 41. With reference to FIG.8, gearbox 41 includes an internal gear formed on the inside surface of gearbox 41, a sun gear 50 and planetary gears 51 and 52. Rotation of input shaft 41a causes direct rotation of sun gear 50 and hence planetary gears 51 and 52 rotate respectively about shafts 53 and 54. This causes gearbox 41 to rotate about input shaft 41a and at the same time causes planetary gears 51 and 52 themselves to rotate around sun gear 50 in the direction opposite to gearbox 41. Rotation of gearbox 41 causes rotation of sprocket 42 and shaft 45. Shaft 45 as is apparent from FIG.7 rotates sprockets 43 and 44 which in turn controls the movement of chains 26 and 27 thus effecting a shift in position of the trailing components 19. While on the other hand, rotation of planetary gears 51 and 52 around sun gear 50 causes shaft 39 to rotate through shafts 53 and 54 together with a cross member 55. Rotation of shaft 39 then causes rotation of sprockets 38 and 37 and shaft 45a. Shaft 45a rotates sprockets 35 and 36 which in turn controls the movement of chains 24 and 25 thus effecting a shift in position of the leading components 10. Rotations of shafts 45 and 45a resulting from operation of crank 49 are effected in the respective directions opposite to each other, and thus relative movement between the leading and trailing components is effected. In order to effect a shift in position of the leading and trailing components as from that indicated in FIG.2 for example to that indicated in FIG.3, crank 49 is rotated clockwise as viewed in FIGS.7 and 8 to rotate shaft 45a clockwise and shaft 45 counterclockwise. Once the desired shift in position of the leading and trailing components of the flight bars is effected, clamping bearing 48 is tightly secured about input shaft 41a thus precluding further rotation of 41a and causes shafts 45 and 45a to rotate together in the same direction without any relative rotation therebetween. This restores the trailing components in the desired position relative to their associated leading components.

As shown in FIG.7, driving motor 30 is arranged through its shaft 31 and the sprocket 32 mounted on shaft 31 to drive the driving chain 33 so as to impart rotary motion to driving sprocket 34. The driving sprocket 34 drives sprockets 35, 36, and 37 and chains 24 and 25 through inner shaft 45a. Thus sprocket 37 drives sprocket 38, shaft 39 and output shaft 41b of gearbox 41. Input shaft 41a of gearbox 41 is normally restrained as by clamping bearing 48. This causes sprocket 40 which is attached to gear box 41, to rotate but at slightly different speed from shaft 39 thus driving sprocket 42 which is connected to sprockets 43 and 44 and chains 26 and 27 by virtue of the action of hollow shaft 45.

The ratio of the gear box 41 that causes shaft 39 and sprocket 40 to rotate at different speeds is compensated for by the difference in the number of teeth on sprocket 38 and sprocket 40 thus causing hollow shaft 45 to rotate at the same speed as the inner shaft.

In order to impart simultaneous relative movement to all of the leading and trailing components such as 10 and 19. Appropriate rotation of a manually operated control such as crank 49 is effected. Rotation of crank 49 imparts movement to leading and trailing components 10 and 19 through chains 24, 25, 26 and 27 so as to effect rapid and efficient adjustment of the flight bar units for use in conjunction with packages having a wide variety of dimensions. Flight bar plates 15 and 21 also move to change the angle of engagement with the incoming products to be loaded thus to ensure a constant speed of the incoming items prior to engagement with the flight bars.

Although it is normally desirable to adjust all the flight bars simultaneously it is envisaged that a flight bar conveying system according to the invention may be modified by adjusting some, but not all, the flight bars in the series. For example, alternate flight bars only could be adjusted in order to alter the spacing between adjacent flight bars. Moreover, not all the flight bars in the system need be adjustable since as in the example referred to where alternate flight bars only are adjusted, the remaining flight bars may be non-adjustable and/or of some other form.

Other arrangements for controlling the endless chains may alternatively be used in the present invention. One of such arrangements may be the one wherein the first pair of endless chains 24 and 25 are operably connected to a motor through a suitable clutch unit and the second pair of endless chains 26 and 27 are operably connected to the same motor through another suitable clutch unit. Such an arrangement allows the first and second pairs of endless chains to move independently from each other to shift the positions of the leading and trailing components relative to each other.

## Claims

1. A flight bar unit for a packaging machine which unit comprises a leading flight bar component (10) and a trailing flight bar component (19) which components are interrelated so that they can be shifted relative to one another characterised in that the interrelation comprises linkage means (15, 21) formed to provide an end face (21a) across the space between said flight bar components at each end of the unit when the components are spaced apart, said end face being angled to facilitate an article grouping function by engagement with rows of incoming articles to be loaded and which are moved at an acute angle into the path of movement of the flight bar unit.

2. A flight bar unit according to claim 1 wherein when the components are closed, the linkage means is put into an inoperative position and wherein an angled end face (11a) of the leading flight bar component being angled to facilitate article grouping function by engagement with rows of incoming articles to be loaded which are moving at an acute angle into the path of movement of the flight bar unit.

3. A flight bar according to claim 1 or claim 2 wherein said linkage means is provided for altering the angle of the ends and/or end faces of the ends of the unit when the leading and trailing components are shifted relative to one another.

4. A flight bar unit according to claim 3 wherein said linkage means (15, 21) is pivoted at one of its ends to said leading flight bar component and includes slot (23) adjacent other end in which a pin (22) provided by the trailing flight bar components is slidably received to facilitate pivoting movement.

## Patentansprüche

1. Schwanghebel-Einheit für eine Verpackungsmaschine, wobei die Einheit eine Schwunghebel-Führungskomponente (10) sowie eine nachlaufende Schwunghebel-Komponente (19) umfaßt, wobei die Komponenten in wechselseitiger Beziehung stehen, so daß sie im Verhältnis zueinander verstellt werden können, dadurch gekennzeichnet, daß die Wechselbeziehung Verbindungselemente (15, 21) umfaßt, die ausgebildet sind, um eine Endfläche (21a) über dem Raum zwischen den Schwunghebel-Komponenten an jedem Ende der Einheit auszubilden, wenn die Komponenten voneinander beabstandet sind, wobei die Endfläche winklig ist, um eine Gegenstands-gruppierende Funktion durch In-Eingriffnahme mit Reihen von ankommenden zu beladenden Gegenständen zu erleichtern, und die in einem spitzen Winkel des Bewegungsweges der Schwunghebel-Einheit geführt werden.

2. Schwunghebel-Einheit nach Anspruch 1, in welcher die Komponenten geschlossen sind, die Verbindungseinrichtung in eine inoperative Stellung gebracht ist und in welcher eine winklige Endfläche (11a) der Führungsschwunghebel-Komponente winklig ist, um eine Gegenstands-gruppierende Funktion durch In-Eingriffnahme mit Reihen ankommender und zu befüllender Gegenstände zu erleichtern, die sich in einem spitzen Winkel in die Bewegungsstrecke der Schwunghebel-Einheit bewegen.

3. Schwunghebel-Einheit nach Anspruch 1 oder 2, in welcher die Verbindungseinrichtung bereitgestellt ist, um den Winkel der Enden und/oder Endflächen der Enden der Einheit zu ändern, wenn die führenden und nachlaufenden Komponenten im Verhältnis zueinander verstellt werden.

4. Schwunghebel-Einheit nach Anspruch 3, in welcher die Verbindungseinrichtung (15, 21) an einem ihrer Enden zu der führenden Schwunghebel-Komponente schwenkbar ist und einen Schlitz (23) einschließt, der an das andere Ende angrenzt, in welchem ein Stift (22), der durch die nachlaufende Schwunghebel-Komponente bereitgestellt wird, gleitend aufgenommen wird, um die Schwenkbewegung zu vereinfachen.

## Revendications

1. Unité de transport à barre de poussée pour une machine d'emballage, cette unité comprenant un composant antérieur de barre de poussée (10) et un composant postérieur de barre de poussée (19), lesquels composants sont interconnectés d'une façon telle qu'ils puissent être déplacés l'un par rapport à l'autre, caractérisée en ce que l'interconnexion comprend des moyens formant une liaison articulée (15, 21), conçus de façon à présenter une face d'extrémité (21a) en travers de l'espace formé entre lesdits composants de barre de poussée, à chaque extrémité de l'unité, lorsque les composants sont écartés l'un de l'autre, ladite face d'extrémité étant inclinée pour favoriser une fonction de regroupement d'articles en venant en contact avec des rangées d'articles arrivant qui sont destinés à être chargés et qui sont déplacés suivant un angle aigu dans le trajet de déplacement de l'unité de transport à barre de poussée.

2. Unité de transport à barre de poussée selon la revendication 1, dans laquelle, lorsque les composants sont refermés l'un sur l'autre, les moyens formant une liaison articulée sont placés dans une position inactive et dans laquelle une face d'extrémité inclinée (11a) du composant antérieur de barre de poussée est inclinée pour favoriser la fonction de regroupement d'articles en venant en contact avec des rangées d'articles arrivant destinés à être chargés, qui se déplacent suivant un angle aigu dans le trajet de déplacement de l'unité de transport à barre de poussée.

3. Barre de poussée selon la revendication 1 ou la revendication 2, dans laquelle lesdits moyens formant une liaison articulée sont conçus pour modifier l'angle des extrémités et/ou des faces d'extrémité des extrémités de l'unité, lorsque les composants antérieur et postérieur sont déplacés l'un par rapport à l'autre.

4. Unité de transport à barre de poussée selon la revendication 3, dans laquelle lesdits moyens formant une liaison articulée (15, 21) sont reliés à pivotement, à l'une de leurs extrémités audit composant antérieur de barre de poussée et comprennent une fente (23) adjacente à l'autre extrémité, fente dans laquelle un ergot (22), que présentent les composants postérieurs de barre de poussée, est reçu à coulissement afin de favoriser le mouvement de pivotement.
